# EUROPÄISCHE PATENTSCHRIFT

(11) **EP 1 193 299 B1**
(45) Veröffentlichungstag und Bekanntmachung des Hinweises auf die Patenterteilung: **16.08.2006**
(21) Anmeldenummer: 01121700.7
(22) Anmeldetag: 17.09.2001
(51) Int. Cl.: C09D 7/06, C08F 290/04, C08F 290/06

(54) **Verwendung verzweigter Polymere als Verlaufmittel für Beschichtungsmittelformulierungen zur Oberflächenbeschichtungen**
Use of branched polymers as levelling agent in formulations for surface coating
Utilisation de polymères branchés comme agent d'écoulement pour revêtement de surface

(30) Priorität: 29.09.2000 DE 10048258
(43) Veröffentlichungstag der Anmeldung: 03.04.2002
(73) Patentinhaber: Byk-Chemie GmbH, 46483 Wesel (DE)
(72) Erfinder: Haubennestel, Karlheinz, 46487 Wesel (DE); Bubat, Alfred, 46487 Wesel-Bislich (DE); Frank, Albert, 46509 Xanten (DE)
(74) Vertreter: Leifert, Elmar

(56) Entgegenhaltungen:
- EP-A- 0 732 346
- EP-A- 0 735 066
- EP-A- 0 783 023
- EP-A- 1 006 165
- WO-A-95/02016
- DE-A- 19 707 786
- US-A- 4 812 364
- US-A- 5 770 646

## Beschreibung

Die Erfindung betrifft die Verwendung von verzweigten Polymeren mit einem Gewichtsmittel des Molekulargewichts von 5.000 bis 100.000, um Beschichtungsmitteln, wie z. B. Lacken, eine gleichmäßige Oberfläche zu verleihen.

Lackoberflächen sind im Normalfall nicht ganz glatt, sondern weisen eine mehr oder weniger strukturierte Oberfläche auf, die als Welligkeit oder auch Orangenschalenstruktur bezeichnet wird. Diese Oberflächen können fein strukturiert mit einer kurzen Welle, oder grob strukturiert mit einer langen Welle sein. In den meisten Fällen ist diese Welligkeit nicht erwünscht. Es besteht eine Abhängigkeit der Struktur von der Art und der Zusammensetzung der Beschichtungsmittel, z. B. ob diese Beschichtungsmittel Lösemittel enthalten oder aber lösemittelfrei sind, wie dies bei Pulverlacken der Fall ist. Bei Pulverlacken ist es zwingend notwendig Verlaufmittel zuzusetzen, da ohne diese Verlaufmittel keine einigermaßen glatte Oberfläche erreicht werden kann.

Es ist bekannt, daß als verlauffördernde Mittel für Beschichtungen Poly(meth)acrylsäureester und Polysiloxane eingesetzt werden können. Bei den Polysiloxanen handelt es sich meistens um Polydimethylsiloxane, Polymethylalkylsiloxane oder aber auch Polyether- oder Polyester-modifizierte Polydimethyl- oder Polymethylalkylsiloxane.

Bei den Poly(meth)acrylaten werden bevorzugt Polymere oder Copolymere von Acrylsäurealkylestern mit einer Kettenlänge des Alkylrestes von C₂ - C₈ eingesetzt, wie z. B. Ethylacrylat, 2-Ethylhexylacrylat oder auch n-Butylacrylat. Die verwendeten Produkte besitzen teilweise Molekulargewichte von bis zu 100.000.

Diese als verlaufsfördernde Mittel eingesetzten Poly(meth)acrylat(co)polymere können als solche oder als Lösungen in organischen Lösungsmitteln, aber auch als auf z. B. Kieselsäure aufgebrachte Pulver eingesetzt werden. Dies ist besonders bei der Verwendung in Pulverlacken üblich. Die Einsatzmengen solcher Produkte betragen üblicherweise 0,1 bis 2 Gew.-% bezogen auf die Beschichtungsformulierungen.

Die Wirkung all dieser Produkte beruht auf einer Grenzflächenaktivität an der Grenzfläche flüssig/gasförmig, in dem sich diese Produkte aufgrund einer gewissen Unverträglichkeit mit dem eigentlichen Bindemittel des Beschichtungssystems zur Grenzfläche orientieren. Diese Unverträglichkeit kann durch Erhöhung des Molekulargewichtes dieser Polymeren gesteigert werden. Nachteilig ist dann jedoch, daß aufgrund dieser Unverträglichkeit eine gewisse Trübung der Beschichtung auftreten kann und die Viskosität des Verlaufmittels so hoch wird, daß eine leichte Handhabung für den Verwender nicht oder nur sehr schwer gegeben ist.

Eine Lösung des Verlaufproblems bei Beschichtungen ist mit den bestehenden Polymeren nur ungenügend gegeben, und es besteht ein dringender Bedarf nach neuen verlaufsfördernden Mitteln, welche es ermöglichen, absolut glatte Beschichtungsfilme zu erzeugen, was besonders bei Pulverlacken von größter Wichtigkeit ist.

Überraschenderweise wurde gefunden, daß diese Aufgabenstellung dadurch gelöst werden kann, daß den Oberflächenbeschichtungen verzweigte Polymere bestehend aus einem radikalisch oder ionisch polymerisierten Basismolekül, in das monoethylenisch ungesättigte makromonomere Einheiten einpolymerisiert wurden, als Verlaufmittel zugesetzt werden.

Bei der Copolymerisation dieser im Molekulargewicht sehr unterschiedlichen Monomeren bilden sich stark verzweigte Polymere, die trotz eines hohen Gesamtmolekulargewichts eine deutlich geringere Kettenlänge des Basismoleküls aufweisen bedingt durch die makromolekularen Seitenketten. Außerdem lassen sich durch geeignete Auswahl der Monomeren für das Basismolekül und der Monomeren des Makromonomeren Blockstrukturen unterschiedlicher Verträglichkeiten erzielen, was durch eine radikalische Copolymerisation von niedermolekularen Monomeren nicht möglich ist.

Gegenstand der Erfindung ist daher die Verwendung von verzweigten Polymeren mit einem Gewichtsmittel des Molekulargewichtes von 5.000 bis 100.000, welche aus einem radikalisch oder ionisch polymerisierten Basismolekül bestehen, in das makromonomere Einheiten, die an einem terminalen Ende eine monomere Einheit mit einer ethylenisch ungesättigten Bindung aufweisen und die ein Gewichtsmittel des Molekulargewichtes von 1.000 bis 30.000 besitzen, radikalisch oder ionisch einpolymerisiert sind, wobei der Gewichtsanteil der makromonomeren Einheiten bezogen auf das Gesamtgewicht des verzweigten Polymers 1 bis 60 Gew.-% beträgt, als Verlaufmittel für Beschichtungsmittelformulierungen zur Oberflächenbeschichtung.

Vorteilhafte Ausgestaltungen der erfindungsgemäßen Verwendung ergeben sich aus den Unteransprüchen.

Propfcopolymere mit kammartiger Struktur, die aus einer Hauptkette und als Seitenketten einpolymerisierten Makromonomeren bestehen, sind an sich bekannt. Sie werden beispielsweise als Pigmentdispergiermittel verwendet und weisen in diesem Fall pigmentaffine Gruppen im Molekül auf. Beispielsweise sind aminfunktionelle Polymere mit einem Makromonomeranteil in der EP-A-732 346 beschrieben. An Dispergiermittel werden jedoch vollkommen andere Anforderungen gestellt als an Verlaufmittel. Es war daher nicht naheliegend, Propfcopolymere mit kammartiger Struktur als Verlaufmittel einzusetzen.

Um die erfindungsgemäß als Verlaufmittel zu verwendenden verzweigten Polymere herzustellen, werden monoethylenisch ungesättigte Monomere mit monoethylenisch ungesättigten Makromonomeren mit Molekulargewichten (MW) von 1.000 bis 30.000, bevorzugt 5.000 bis 10.000, nach bekannten Verfahren bevorzugt radikalisch oder ionisch copolymerisiert.

Bevorzugte radikalisch oder ionisch polymerisierte monomere Einheiten des Basismoleküls sind ausgewählt aus der Gruppe bestehend aus Alkenen und Arylalkenen mit 2 bis 30 C-Atomen, Alkylacrylaten und Alkylmethacrylaten von geradkettigen, verzweigten oder cycloaliphatischen Alkoholen mit 1 bis 22 C-Atomen, Aralkylacrylaten und Aralkylmethacrylaten von Aralkylalkoholen mit 8 bis 18 C-Atomen, Acrylsäureamiden und Methacrylsäureamiden von geradkettigen, verzweigten oder cycloaliphatischen Aminen mit 1 bis 22 C-Atomen, Aminoalkylacrylaten und Aminoalkylmethacrylaten von geradkettigen, verzweigten oder cycloaliphatischen Aminoalkohlen mit 2 bis 8 C-Atomen, Maleinsäureestern, Itaconsäureestern und Fumarsäureestern von geradkettigen, verzweigten oder cycloaliphatischen Alkoholen mit 1 bis 22 C-Atomen, und Vinylestern, Vinylethern und Vinylketonen mit 3 bis 20 C-Atomen.

Als monomere Einheiten des Basismoleküls können auch Polyethylenglykol-haltige monomere Einheiten verwendet werden, um eine Wasserlöslichkeit bzw. Wasseremulgierbarkeit der erfindungsgemäß zu verwendenden verzweigten Polymere zu ermöglichen. Als Polyethylenglykol-haltige monomere Einheiten können beispielsweise Polyethylenglykolmonoacrylate oder Polyethylenglykolmonomethacrylate mit 5 bis 80 C-Atomen verwendet werden.

Des Weiteren können monomere Einheiten mit funktionellen Gruppen verwendet werden, um eine spätere Einbindung in die jeweilige polymere Matrix oder das Bindemittel zu ermöglichen. So können als monomere Einheiten mit funktionellen Gruppen beispielsweise Acrylsäure, Methacrylsäure sowie Hydroxyalkylacrylate oder Hydroxyalkylmethacrylaten von geradkettigen, verzweigten oder cycloaliphatischen Diolen mit 2 bis 36 C-Atomen verwendet werden. Um eine Vernetzung der erfindungsgemäßen Hydroxy-funktionellen Verlaufmittel mit z. B. Acryl-Melamin-Formaldehydharzen zu ermöglichen, ist es auch möglich diese Hydroxylgruppen teilweise oder ganz mit Isocyanaten zu sekundären Carbamat-Gruppen umzusetzen, so daß bei der Vernetzung des Gesamtsystems dem Verlaufmittel genügend Zeit verbleibt, sich an der Grenzfläche zu orientieren, seine Wirkung dort zu entfalten und nach einer gewissen Zeitverzögerung mit dem Melaminformaldehydharz zu reagieren.

Um die Oberflächenspannung der erfindungsgemäß zu verwendenden verzweigten Polymere stark zu erniedrigen, ist es vorteilhaft, geringe Mengen an monomeren Einheiten mit Perfluoralkylgruppen mit einzupolymerisieren. So können als monomere Einheiten mit Perfluoralkylgruppen beispielsweise Perfluoralkylacrylate oder Perfluormethacrylate mit 6 bis 20 C-Atomen verwendet werden.

Auch der Einbau von Polyestern in Form Caprolacton- und/oder Valerolacton-modifizierter monomerer Einheiten in das polymere Basismolekül ist möglich. Bevorzugt werden Caprolacton- und/oder Valerolacton-modifizierte Hydroxyalkylacrylate und Caprolacton- und/oder Valerolacton-modifizierte Hydroxyalkylmethacrylate mit einem mittleren Molekulargewicht von 220 bis 1.200 eingesetzt, wobei die Hydroxyalkylacrylate und die Hydroxymethacrylate bevorzugt von geradkettigen, verzweigten oder cycloaliphatischen Diolen mit 2 bis 8 C-Atomen abgeleitet sind.

Ganz besonders bevorzugte monomere Einheiten des Basismoleküls sind ausgewählt aus der Gruppe bestehend aus Acrylsäure, Methacrylsäure, Methylacrylat, Methylmethacrylat, Ethylacrylat, Ethylmethacrylat, n-Butylacrylat, n-Butylmethacrylat, i-Butylacrylat, i-Butylmethacrylat, t-Butylacrylat, t-Butylmethacrylat, Laurylacrylat, Laurylmethacrylat, 2-Ethylhexylacrylat, 2-Ethylhexylmethacrylat, Stearylacrylat, Stearylmethacrylat, Behenylacrylat, Behenylmethacrylat, Cyclohexylacrylat, Cyclohexylmethacrylat, Isobornylacrylat, Isobornylmethacrylat, Hydroxyethylacrylat, Hydroxyethylmethacrylat, Styrol, α-Methylstyrol, Acrylnitril, Triethylenglycolmonoacrylat, Triethylenglycolmonomethacrylat, Ethylvinylether, Butylvinylether, Cyclohexylvinylether, Vinylacetat, N,N-Dimethylaminoethylacrylat, N,N-Dimethylaminoethylmethacrylat, N,N-Dimethylaminopropylacrylat, N,N-Dimethylaminopropylmethacrylat, Polyethylenglykolmonoacrylat, Polyethylenglykolmonomethacrylat, sowie Caprolacton- und/oder Valerolacton-modifiziertem Hydroxyethylacrylat und Caprolacton-und/oder Valerolacton modifiziertem Hydroxyethylmethacrylat mit einem Molekulargewicht zwischen 220 und 1.200.

Die o. a. ethylenisch ungesättigten Monomere können einzeln oder in Kombination zum Basismolekül polymerisiert werden, in Abhängigkeit der gewünschten Bindemittelverträglichkeit.

Als makromonomere Einheiten können Polymere aus radikalischer oder ionischer Polymerisation verwendet werden. Zur Herstellung dieser Makromonomeren eignen sich bevorzugt Alkene und Arylalkene mit 2 bis 30 C-Atomen, Alkylacrylate und Alkylmethacrylate von geradkettigen, verzweigten oder cycloaliphatischen Alkoholen mit 1 bis 22 C-Atomen, Aralkylacrylate und Aralkylmethacrylate von Aralkylalkoholen mit 8 bis 18 C-Atomen, Polyethylenglykolmonoacrylate oder Polyethylenglykolmonomethacrylate mit 5 bis 80 C-Atomen, Hydroxyalkylacrylate und Hydroxyalkylmethacrylate von geradkettigen, verzweigten oder cycloaliphatischen Diolen mit 2 bis 36 C-Atomen, sowie Vinylester, Vinylether und Vinylketone mit 3 bis 20 C-Atomen. Um die Oberflächenspannung der verzweigten Polymere drastisch zu erniedrigen, ist es weiterhin vorteilhaft, auch in den makromonomeren Einheiten Perfluoralkylacrylate und Perfluoralkylmethacrylate mit 6 bis 20 C-Atomen mit einzupolymerisieren.

Besonders bevorzugte monomere Einheiten zur Herstellung der makromonomeren Einheiten durch radikalische oder ionische Polymerisation sind ausgewählt aus der Gruppe bestehend aus Ethylacrylat, Ethylmethacrylat, n-Butylacrylat, n-Butylmethacrylat, i-Butylacrylat, i-Butylmethacrylat, t-Butylacrylat, t-Butylmethacrylat, Laurylacrylat, Laurylmethacrylat, Stearylacrylat, Stearylmethacrylat, 2-Ethylhexylacrylat, 2-Ethylhexylmethacrylat, Behenylacrylat, Behenylmethacrylat, Cyclohexylacrylat, Cyclohexylmethacrylat, Isobornylacrylat, Isobornylmethacrylat, Hydroxyethylacrylat, Hydroxyethylmethacrylat, Styrol, α-Methylstyrol, Acrylnitril, Triethylenglycolmonoacrylat, Triethylenglycolmonomethacrylat, Ethylvinylether, Butylvinylether, Cyclohexylvinylether, sowie Vinylacetat

Die o. a. ethylenisch ungesättigten Monomere können einzeln oder in Kombination zur makromonomeren Einheit polymerisiert werden, in Abhängigkeit der gewünschten Bindemittelverträglichkeit

Um sicherzustellen, daß diese Makromonomeren nur eine einzige ethylenisch ungesättigte Endgruppe tragen, sind spezielle Syntheseverfahren notwendig. Zum einen können diese mit Hilfe von sogenannten *"Chain Transfer Agents"* hergestellt werden, wie in US-A-5 770 646 beschrieben. Hierzu werden Kobaltkomplexe in Konzentrationen von 5 bis 1000 ppm. eingesetzt. Bevorzugt sind z. B. Pentacyanocobaltat (II) oder Diaquabis(bordifluordimethylphenylglyoximato)-cobaltat (II). Die entsprechenden Co(III) Komplexe finden gleichermaßen Verwendung. Die Polymerisation wird dann in Lösemitteln wie z. B. Aromaten, Ketonen, Acetaten, Alkoholen oder Glycolethern durchgeführt. Als Radikale erzeugende Initiatoren werden die dem Fachmann bekannten Peroxo- und/oder Azoinitiatoren eingesetzt. Zum anderen können diese Makromonomere durch radikalische Polymerisation in Gegenwart einer Mercapto-funktionellen Carbonsäure als Kettenregler, wie z. B. Mercaptoessigsäure oder Mercaptopropionsäure, hergestellt werden. Diese endständige Carboxyfunktion wird mit Glycidylmethacrylat zum Methacryl-funktionellen, polymerisierbaren Makromonomeren weiter umgesetzt. Hydroxy-funktionelle Kettenregler, wie z. B. Mercaptoethanol oder Mercaptopropanol sind auch geeignet. Diese Polymeren tragen dann an einem Ende eine Hydroxyfunktion, die nach bekannten Verfahren zum (Meth)acryl-funktionellen polymerisierbaren Makromonomeren umgesetzt wird. Die Herstellung solcher Makromonomeren ist in verschiedenen Patentschriften beschrieben, wie z. B. WO 95/12568, WO 97/13792 und DE-A-27 51 581.

Weitere Herstellungsmöglichkeiten für Makromonomere sind in dem Übersichtsartikel von Koichi Ito mit dem Titel *"Polymeric Design by Macromonomer Technique"* aus Prog. Polym. Sci., Vol. 23, 581 ff., 1998 genannt.

Zusätzlich zu den durch radikalische oder ionische Polymerisation erhältlichen makromonomeren Einheiten können auch andere Makromonomere, wie zum Beispiel monoethylenisch ungesättigte Polydimethylsiloxane, die man aus Monohydroxyfunktionellen Polysiloxanen durch z. B. Umsetzung mit (Meth)acrylsäurechlorid oder Allylchlorid oder durch Veresterung mit (Meth)acrylsäure erhält, zur Herstellung der verzweigten Polymere verwendet werden.

Eine weitere Methode zur Herstellung solcher Makromonomere ist beschrieben in dem US Patent US-A-5 840 813, wonach z. B. ein Silanol-endgeblocktes Polydimethylsiloxan mit Acryloxypropyldimethylchlorsilan oder Methacryloxypropyldimethylchlorsilan in Anwesenheit von Dibutylamin umgesetzt wird. Es entstehen dann ebenfalls Acryl- oder Methacryl-funktionelle Dimethylpolysiloxane.

Die zur Herstellung der erfindungsgemäß als Verlaufmittel einzusetzenden verzweigten Polymere verwendeten monoethylenisch ungesättigten makromonomeren Einheiten weisen an einem terminalen Ende bevorzugt eine Struktur ausgewählt aus den Strukturen 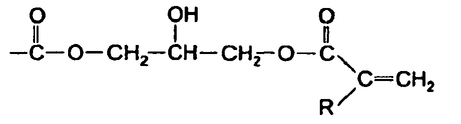 und 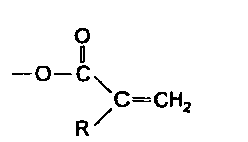 in denen der Rest R einem Wasserstoffatom oder einer Methylgruppe entspricht, auf.

Die Herstellung der erfindungsgemäß als Verlaufmittel zu verwendenden verzweigten Polymere erfolgt in für den Fachmann bekannter Weise mittels z. B. radikalischer Polymerisation in organischen Lösemitteln oder in Masse mittels Peroxiden oder Azoverbindungen als Radikalbildner (Initiatoren). Als Lösemittel kommen Ester wie z. B. Ethylacetat, n-Butylacetat oder 1-Methoxy-2-propylacetat in Frage sowie aromatische Lösemittel, wie z. B. Toluol oder Xylol und Ketone, wie z. B. Methylisobutylketon oder Methylethylketon. Die Wahl des Lösemittels richtet sich nach dem späteren Einsatzzweck des erfindungsgemäßen Copolymeren. Bevorzugt werden niedrigsiedende Lösemittel eingesetzt, um das Abdestillieren dieser Lösemittel zu erleichtern bei Anwendungen, wo die 100 %-igen Polymeren eingesetzt werden sollen, wie z. B. in Pulverlacken. Als Initiatoren kommen Peroxide wie z. B. Tert.-Butylperoxobenzoat oder Dibenzoylperoxid in Frage. Es können aber auch Azo-Verbindungen wie z. B. Azoisobutyronitril (AIBN) eingesetzt werden. Bevorzugt werden Peroxide eingesetzt. Die Polymerisation wird bei Temperaturen von ca. 40° C bis 180° C, bevorzugt bei 100° C bis 150° C, besonders bevorzugt bei 110° C bis 130° C durchgeführt.

Die Herstellung der erfindungsgemäß einzusetzenden verzweigten Polymere kann auch mit anderen Verfahren der radikalischen Polymerisation, wie z. B. der *Atom Transfer Radical Polymerization* (ATRP) oder der *Reversible Addition Fragmentation Chain Transfer* (RAFT) erfolgen. Außerdem ist die Herstellung dieser Verbindungen über ionische Polymerisation möglich, z. B. über mit metallorganischen Verbindungen gestartete Polymerisation oder durch *Group-Transfer-Polymerization* (GTP).

Vorteilhaft werden die vorgenannten Monomeren mit einem ethylenisch ungesättigten Makromonomeren oder Mischungen von zwei oder mehreren Makromonomeren in einer Menge von 1 bis 60 Gew.-%, bevorzugt von 2 bis 30 Gew.-%, ganz besonders bevorzugt von 2 bis 15 Gew.-% Makromonomer bezogen auf das Basismolekül copolymerisiert.

Die Molekulargewichte der erfindungsgemäß zu verwendenden verzweigten Polymeren liegen im Bereich von 5.000 bis 100.000, bevorzugt 10.000 bis 75.000, besonders bevorzugt im Bereich von 15.000 bis 50.000.

Die verzweigten Polymere können durch polymeranaloge Reaktion noch nachträglich modifiziert werden. Z. B. kann durch die Reaktion eines verzweigten Polymers, das hydroxyfunktionelle monomere Einheiten im Basismolekül enthält, mit Maleinsäureanhydrid eine reaktive Doppelbindung und Säurefunktion mit eingebaut werden. Weitere geeignete Anhydride zur Einführung der Säurefunktion sind z. B. Bernsteinsäureanhydrid und Phthalsäureanhydrid, wobei hydroxyfunktionelle monomere Einheiten innerhalb eines verzweigten Polymers auch mit strukturell verschiedenen Anhydriden verestert werden können. Die Säurefunktion kann zur besseren Wasserlöslichkeit z. B. mit Alkanolaminen auch versalzt werden. Weiterhin können durch nachträgliche Acrylierung und/oder Methacrylierung an der Hydroxygruppe Produkte erhalten werden, die sich auch bei strahlenhärtenden Prozessen, wie UV- und Elektronenstrahlhärtung, fest in Lacksysteme einbauen lassen.

Die erfindungsgemäß als Verlaufmittel zu verwendenden verzweigten Polymere werden in den Beschichtungsformulierungen in relativ geringen Mengen von 0,01 bis 5 Gew.-%, bevorzugt 0,05 bis 2 Gew.-%, ganz besonders bevorzugt 0,01 bis 1 Gew.-% eingesetzt.
Die erfindungsgemäß als Verlaufmittel einzusetzenden verzweigten Polymere können als Lösungen, Emulsionen oder als 100%-ige Stoffe eingesetzt werden, abhängig von der Art und Applikationsweise des Beschichtungsstoffes.

In lösungsmittelhaltigen Lacken werden bevorzugt Verlaufmittel eingesetzt, die in ähnlichen Lösemitteln angelöst sind wie die Lacke selbst. In strahlenhärtenden Systemen werden die Verlaufmittel bevorzugt in entsprechenden Monomeren angelöst. In Pulverlacken bevorzugt man eine 100%-ige Version des Verlaufmittels bzw. eine auf pulverförmigem Trägermaterial aufgebrachte Form dieser Verlaufmittel. Auch können diese Verlaufmittel gemäß der deutschen Patentanmeldung DE-A-195 22 475 in Wachsschmelzen eingearbeitet werden und auf diese Art und Weise in rieselfähige feste Formen überführt werden wenn die erfindungsgemäß als Verlaufmittel einzusetzenden verzweigten Polymere viskose, klebrige Harze darstellen. In wässrigen Pulverslurrys, einer Abart der Pulverlackierung, können die Verlaufmittel als wässrige Emulsion zugesetzt werden. Diese Emulsionen werden dem Stand der Technik gemäß mit Hilfe von Emulgatoren hergestellt.

### Herstellungsbeispiele

Die Erfindung wird durch nachfolgende Beispiele zusätzlich erläutert. Bei molekular uneinheitlichen Substanzen stellen die angegebenen Molekulargewichte (im folgenden abgekürzt durch "MG") Durchschnittswerte des Gewichtsmittels dar. Sofern nicht anders ausgeführt, handelt es sich bei Teilen um Gewichtsteile und bei Prozenten um Gewichtsprozente.

### A) Herstellungsbeispiele für die Makromonomere

### Herstellung eines Poly-(iso-Butylacrylat/Benzylmethacrylat)-Makromonomers (Makromonomer 1):

86,5 g n-Butylacetat werden in einem Kolben mit Rückflußkühler, Thermometer, Rührer, Gaseinleitungsrohr und Tropftrichter vorgelegt und unter Stickstoffatmosphäre zum Sieden gebracht. Unter Rückfluß wird eine Mischung aus 66,7 g iso-Butylacrylat, 13,3 g Benzylmethacrylat, 4,5 g Mercaptopropionsäure als Kettenregler und 2 g tert.-Butylperoxobenzoat als Polymerisationsinitiator innerhalb von drei Stunden zudosiert. Nach beendeter Zugabe wird die Reaktion weitere zwei Stunden durchgeführt. Man erhält ein Polymer mit terminaler Carboxyfunktion. Die Reaktionsmischung wird auf 90°C abgekühlt und 200 ppm Hydrochinonmonomethylether als Polymerisationsinhibitor werden zugegeben. Dann werden 12 g Glycidylmethacrylat und ein geeigneter Katalysator, z. B. ein tert. Amin zugegeben und die Mischung weitere sechs Stunden bei 90°C gehalten. Das so hergestellte Polymer enthält eine terminale Methacryl-Funktion, die zu weiterer Polymersation befähigt ist. Das Molekulargewicht beträgt 6.000.

Die in der folgenden Tabelle beschriebenen Makromonomere sind in analoger Weise mit Glycidylmethacrylat hergestellt worden.

| | | |
|---|---|---|
| Makromonomer 2 | Methylmethacrylat | MG ca. 2.000 |
| Makromonomer 3 | Styrol / Acrylnitril 3:1 | MG ca. 6.000 |
| Makromonomer 4 | iso-Butylacrylat | MG ca. 4.500 |
| Makromonomer 5 | Methylmethacrylat / Hydroxyethylmethacrylat 4:1 | MG ca. 9.000 |
| Makromonomer 6 | Ethylhexylmethacrylat / Hydroxyethylmethacrylat 6:1 | MG ca. 7.000 |
| Makromonomer 7 | Ethylhexylacrylat | MG ca. 15.000 |
| Makromonomer 8 | Butylacrylat / Stearylmethacrylat 1:1 | MG ca. 6.000 |
| Makromonomer 9 | iso-Butylmethacrylat / Cyclohexylmethacrylat 4:1 | MG ca. 4.000 |
| Makromonomer 10 | n-Butylacrylat | MG ca. 6.000 |
| Makromonomer 11 | Ethylhexylacrylat / Butylacrylat 1:1 | MG ca. 2.500 |
| Makromonomer 12 | Ethylhexylacrylat / Ethylacrylat 9:1 | MG ca. 5.500 |
| Makromonomer 13 | Propylmethacrylat / Octadecylvinylether 9:1 | MG ca. 6.000 |
| Makromonomer 14 | Hydroxyethylmethacrylat / Styrol 1:4 | MG ca. 3.500 |
| Makromonomer 15 | Butylacrylat / Ethylhexylacrylat / Triethylenglyolmo- nomethacrylat 3:3:1 | MG ca. 4.000 |
| Makromonomer 16 | Propylacrylat / Ethylhexylacrylat / Perfluoralkyl- methacrylat 5:5:1 | MG ca. 4.500 |
| Makromonomer 17 | Ethylacrylat / Butylvinylether 1:4 | MG ca. 1.000 |

Die Herstellung des methacrylfunktionellen Polydimethylsiloxans erfolgt durch Umesterung eines monohydroxyfunktionellen Polydimethylsiloxans mit Methylacrylat nach bekannten Verfahren.

| | | |
|---|---|---|
| Makromonomer 18 | Polydimethylsiloxan | MG ca. 5.000 |
| Makromonomer 19 | Polydimethylsiloxan | MG ca. 20.000 |
| Makromonomer 20 | Polydimethylsiloxan | MG ca. 30.000 |

### B) Allgemeine Herstellung der erfindungsgemäßen Polymere

### Beispiel 1

In einem mit Rührer, Thermometer, Destillationsaufsatz, Tropftrichter und Stickstoffeinleitungsrohr versehenen Glaskolben werden 3,9 g eines Makromonomers (Makromonomer 12, siehe Beispiele), bestehend aus einem Poly-(2-Ethylhexylacrylat-Ethylacrylat) mit einer terminalen Methacrylgruppe, Molekulargewicht 5500, und 86,7 g Toluol vorgelegt. Während der gesamten Reaktion wird Stickstoff übergeleitet. Nach Erhöhung der Reaktionstemperatur auf 90°C wird innerhalb eines Zeitraumes von 150 Minuten eine Mischung aus 0.92 g AIBN, 119,6 g 2-Ethylhexylacrylat und 6,5 g Benzylmethacrylat gleichmäßig zudosiert. Nach Abschluß der Zugabe hält man die Reaktionstemperatur noch 120 Minuten bei 90°C. Nach Ablauf dieser Zeit stoppt man die Stickstoffzufuhr und erhöht die Reaktionstemperatur auf 150°C unter gleichzeitigem Anlegen von Vakuum (< 25 mbar). Man destilliert solange Lösungsmittel, Zerfallsprodukte des Radikalstarters und Reste an Monomeren ab, bis die Menge an nichtflüchtigen Anteilen >99% beträgt. Man erhält in ca. 98%iger Ausbeute ein viskoses, leicht gelblich gefärbtes Polymer. Das mittlere Molekulargewicht wird durch Gel-Permeations-Chromatographie mit Polystyrol als Vergleichsstandard zu ca. 15.700 bestimmt.

Die folgenden Beispiele werden analog Beispiel 1 hergestellt.

| Beispiel | Monomere | Einwaage Monomer(e) [g] | Makromonomer(e) | Einwaage Makromo -nomer(e) [g] | Temperatur [°C] | Art und Einwaage Initiator [g] | Art und Menge Lösemittel [g] | MG |
|---|---|---|---|---|---|---|---|---|
| 2 | IBA | 85 | Makromonomer11 | 28 | 125 | 2,83 TrigC | 314 Xyl | 15.000 |
| | EHA | 198 | | | | | | |
| 3 | BA | 120 | Makromonomer19 | 6 | 110 | 0,84 Luc | 84 Xyl | 18.500 |
| 4 | BA | 162 | Makromonomer15 | 40,5 | 125 | 1,89 TrigC | 407 | 32.000 |
| | CHMA | 67,5 | | | | | BuAc | |
| 5 | BHMA | 34 | Makromonomer1 | 85 | 130 | 3,4 TrigC | 630 Xyl | 21.000 |
| | BA | 221 | | | | | | |
| 6 | EHA | 369 | Makromonomer16 | 30,8 | 110 | 4,1 Luc | 136,7 | 25.600 |
| | GMA | 10,3 | | | | | BuAc | |
| 7 | BA | 219,2 | Makromonomer12 | 4,5 | 110 | 1,46 Luc | 149,0 | 74.000 |
| | | | | | | | BuAc | |
| 8 | BMA | 200 | Makromonomer4 | 25 | 110 | 3,75 Luc | 167 Xyl | 11.000 |
| | ItmeE | 25 | | | | | | |
| 9 | HEMA | 10,5 | Makromonomer17 | 5,6 | 130 | 0,49 TriC | 70 BuAc | 45.300 |
| | BA | 44,1 | | | | | | |
| - | LMA | 9,8 | | | | | | |
| 10 | BA | 90 | Makromonomer10 | 10 | 110 | 1,0 Luc | 150 Xyl | 11.500 |
| 11 | Sty | 5,5 | Makromonomer20 | 16,5 | 110 | 1,1 Luc | 257 | 17.800 |
| | EHMA | 71,5 | Makromonomer4 | 16,5 | | | BuAc | |
| 12 | BA | 219,2 | Makromonomer10 | 4,5 | 110 | 1,46 luc | 149 | 89.000 |
| | | | | | | | BuAC | |
| 13 | HPA | 24,5 | Makromonomer9 | 49 | 130 | 4,9 TriC | 490 Xyl | 47.200 |
| | EHA | 196 | Makromonomer19 | 24,5 | | | | |
| | BA | 196 | | | | | | |
| 14 | LMA | 16,2 | Makromonomer4 | 36 | 113 | 1.08 T21 S | 270 Xyl | 36.300 |
| | BA | 54,9 | | | | | | |
| | FMA | 2,7 | | | | | | |
| 15 | EA | 22,7 | Makromonomer10 | 2,5 | 110 | 0,81 Luc | 82 Xyl | 14.000 |
| | EHA | 97,3 | | | | | | |
| 16 | TMA | 11,5 | Makromonomer3 | 16,1 | 130 | 1,96 TrigC | 153,3 | 24.600 |
| | LMA | 34,5 | | | | | BuAc | |
| | BA | 167,9 | | | | | | |
| 17 | LMA | 117,5 | Makromonomer 18 | 23,3 | 110 | 1,32 Luc | 134 Xyl | 40.000 |
| | BA | 59,2 | | | | | | |
| 18 | HA | 269,5 | Makromonomer6 | 35 | 113 | 3,85 T21 S | 525 Tol | 18.500 |
| | BVE | 80,5 | | | | | | |
| 19 | HA | 125,8 | Makromonomer2 | 5,1 | 110 | 1,7 Luc | 315 | 49.500 |
| | OVE | 17 | Makromonomer7 | 22,1 | | | BuAc | |
| 20 | BA | 212,8 | Makromonomer7 | 16,0 | 110 | 3,52 Luc | 137 | 22.700 |
| | EHA | 91,2 | | | | | MIBK | |
| 21 | BA | 174,3 | Makromonomer13 | 18,5 | 130 | 2,67 TrigC | 308 Xyl | 17.600 |
| | Masr | 12,3 | | | | | | |
| 22 | EA | 35,1 | Makromonomer 19 | 14 | 110 | 1,32 Luc | 134 Xyl | 14.000 |
| | EHA | 150,7 | | | | | | |
| 23 | αMsty | 14,5 | Makromonomer20 | 11,6 | 110 | 1,74 Luc | 145 Xyl | 22.000 |
| | BA | 118,9 | | | | | | |
| 24 | HMA | 258 | Makromonomer17 | 129 | 110 | 4,3 Luc | 1003 | 18.900 |
| | HBVE | 43 | | | | | BuAc | |

### Erklärung der Abkürzungen und Handelsnamen

- EHA: = Ethylhexylacrylat
- iBA: = *iso*-Butylacrylat
- BHMA: = Behenylmethacrylat
- BA: = n-Butylacrylat
- CHMA: = Cyclohexylmethacrylat
- BeMA: = Benzylmethacrylat
- BMA: = n-Butylmethacrylat
- ItmeE: = Itaconsäure-di-methylester
- HEMA: = Hydroxyethylmethacrylat
- LMA: = Laurylmethacrylat
- Masr: = Methacrylsäure
- GMA: = Glycidylmethacrylat
- EA: = Ethylacrylat
- Sty: = Styrol
- αMsty: = α-Methylstyrol
- HPA: = Hydroxypropylacrylat
- FMA: = Fluowet MA812, Perfluormethacrylat, Clariant GmbH, D-Frankfurt
- TMA: = Triethylenglykolmethacrylat
- HA: = Hexylacrylat
- BVE: = Butylvinylether
- OVE: = Octadecylvinylether
- HMA: = Hexylmethacrylat
- HBVE: = Hydroxybutylvinylether
- Luc: = Lucidol, Akzo Nobel NV, NL-Amersfoort, 75%iges Dibenzoylperoxid in Wasser
- TrigC: = Trigonox C, Akzo Nobel NV, NL-Amersfoort, tert. Butyl-peroxybenzoat
- T21 S: = Trigonox 21 S, Akzo Nobel NV, NL-Amersfoort, tert. Butylperoxy-2-ethylhexanoat
- AIBN: = 2,2'-Azobis(isobutyronitril)
- BuAc: = n-Butylacetat
- Xyl: = Xylol
- Tol: = Toluol
- MIBK: = Methylisobutylketon

Obwohl Verlaufmittel mit freien Hydroxy-Gruppen vorteilhaft sind bezüglich ihrer Fähigkeit in die Bindemittel kovalent eingebunden zu werden, ist es bekannt, dass sie unter bestimmten Umständen bei Überlackierung zu einer Verschlechterung der Zwischenschichthaftung führen können. Aus diesem Grund kann es sinnvoll sein, diese Hydroxygruppen ganz oder teilweise durch bekannte Verfahren, wie z. B. der Veretherung oder der Acetylierung zu blockieren.

### Beispiel 24: Acetylierung des erfindungsgemäßen Polymers aus Beispiel 9

30 g des Polymers aus Beispiel 9 (Hydroxyzahl ca. 65) werden in einem Vierhalskolben mit Rührer, Thermometer, Rückflußkühler und Stickstoffeinleitungsrohr zusammen mit 4,6 g Essigsäureanhydrid vorgelegt. Während der gesamten Reaktion wird Stickstoff übergeleitet. Unter Rühren wird die Reaktionstemperatur auf 75°C erhöht und zwei Stunden gerührt. Nach Ablauf dieser Zeit sind im IR-Spektrum keine freien Hydroxygruppen mehr nachweisbar. Die Stickstoffzufuhr wird gestoppt und die Reaktionstemperatur auf 150°C unter gleichzeitigem Anlegen von Vakuum (< 25 mbar) erhöht. Man destilliert solange freie Essigsäure und überschüssiges Essigsäureanhydrid ab, bis die Menge an nichtflüchtigen Anteilen >99% beträgt. Es wird ein leicht gelb gefärbtes Polymer erhalten.

### Beispiel 25: Umsetzung des erfindungsgemäßen Polymers aus Beispiel 9 mit Isocyanaten zu sekundären Carbamaten

30 g des Polymers aus Beispiel 9 (Hydroxyzahl ca. 65) und 30 g Butylacetat werden in einem Vierhalskolben mit Rührer, Thermometer, Rückflußkühler, Tropftrichter und Stickstoffeinleitungsrohr zusammen 0,03 g einer 10%igen DBTL-Lösung in Xylol vorgelegt. Während der gesamten Reaktion wird Stickstoff übergeleitet. Unter Rühren wird die Reaktionstemperatur auf 60°C erhöht und innerhalb von 10 Minuten 4,4 g Hexylisocyanat tropfenweise zudosiert. Es setzt eine exotherme Reaktion ein. Nach Ablauf von 90 Minuten sind im IR-Spektrum keine Isocyanat-Gruppen mehr nachweisbar. Die Stickstoffzufuhr wird gestoppt und die Reaktionstemperatur auf 150°C unter gleichzeitigem Anlegen von Vakuum (< 25 mbar) erhöht. Man destilliert solange Butylacetat ab, bis die Menge an nichtflüchtigen Anteilen >99% beträgt. Man erhält ein leicht gelb gefärbtes Polymer.

### Beispiel 26: Umsetzung des erfindungsgemäßen Polymers aus Beispiel 9 mit Maleinsäureanhydrid zum Maleinsäurehalbester

30 g des Polymers aus Beispiel 9 (Hydroxyzahl ca. 65) und 30 g 1-Methoxy-2-propylacetat werden in einem Vierhalskolben mit Rührer, Thermometer, Rückflußkühler und Stickstoffeinleitungsrohr mit 3,3 g Maleinsäureanhydrid versetzt. Während der gesamten Reaktion wird Stickstoff übergeleitet. Das Gemisch wird unter Rühren auf 60°C erhitzt und drei Stunden bei diesen Bedingungen belassen. Nach dieser Zeit sind im IR-Spektrum keine Anhydrid-Banden mehr nachweisbar. Man erhält eine leicht gelb gefärbte Lösung.

Die anwendungstechnische Prüfung der erfindungsgemäßen Polymere erfolgte durch Anwendung in einem Pulverlack und in einem konventionellen lösemittelhaltigen Lack.

### Herstellung eines weißen Pulverlackes

### Zusammensetzung:

| | | |
|---|---|---|
| Uralac P5127 | 28,5%, | Polyesterharz, DSM, |
| DER 663 UE | 28,5% | Epoxyharz, Dow |
| Kronos 2160 | 28,5%, | Titandioxid, Kronos |
| Blancfixe | 14,2% | Bariumsulfat, Sachtleben |
| Benzoin | 0,3% | DSM |
| Verlaufmittel | 0,1 % oder 0,15, siehe Ergebnissetabelle | |

Die Verlaufmittel gemäß den Beispielen wurden als 10%ige Masterbatches in Uralac P5127 eingearbeitet. Dies wurde bei der Einwaage von Uralac P5127 berücksichtigt.

Alle Komponenten wurden zusammen eingewogen und 2,5 min bei 2000 UPM im einem Hochgeschwindigkeitsmischer vorgemischt. Danach wurden die Mischungen in einem Doppelschnecken-Extruder bei 120°C extrudiert. Die entstandenen Stücke wurden gekühlt, gebrochen und in einer Stiftmühle gemahlen. Das entstandene Pulver wurde über ein 100µm Sieb gegeben.

Die so entstandene Pulverlack-Mischung wurde dann elektrostatisch auf Aluminiumbleche (Größe: 152 mm x 76 mm, Dicke 0,5 mm) appliziert und die so beschichteten Bleche 11 Minuten bei 190°C ausgehärtet.

### Ergebnis:

### Additivkonzentration: 0.15%

| Schichtdicke: | 80-90 µm | 60-70 µm |
|---|---|---|
| Acronal 4F | 3 | 3 |
| Beispiel 12 | 1 | 2 |
| Beispiel 10 | 1 | 2 |
| Beispiel 3 | 1 | 1 |

### Additivkonzentration: 0.1 %

| Schichtdicke: | 80 - 90 µm | 60 - 70 µm |
|---|---|---|
| Modaflow | 3 | 3 |
| Beispiel 22 | 1 | 1 |
| Beispiel 15 | 1 | 2 |

| | | |
|---|---|---|
| Acronal 4F = Poly-n-butylacrylat, BASF, Ludwigshafen | | |
| Modaflow = Poly(ethylacrylat/2-ethylhexylacrylat), Monsanto | | |

Bewertung der entstandenen Oberflächen:
1 = kraterfreie Oberfläche
2 = Oberfläche mit leichten Kratern
3 = Oberfläche mit deutlichen Kratern, zum Teil bis zum Untergrund

### Ergebnisse Lösemittel-haltiger AcrylatlMelamin-Einbrennlack

Prüfsystem: Acrylat-Melamin-Einbrennlack, klar

Zusammensetzung:

| | |
|---|---|
| Setalux 1760 VB 64 | 44,0% |
| Setalux C 91389 VX 45 | 16,5% |
| Luwipal 018 | 25,3% |
| Butyldiglykolacetat | 2,1 % |
| Solvesso 150 | 4,8% |
| Butanol | 6,1% |
| Butyldiglykol | 1,2% |
| mischen, dann Zugabe von | |
| Butanol | 8,0% |
| Solvesso 150 | 3,8% |
| Butyldiglykol | 1,8% |

- Setalux 1760 VB 64: = Acrylat-Einbrennharz Akzo Nobel Resins, Bergen op Zoom
- Setalux C 91389 VX 45 =: Acrylat-Einbrennharz Akzo Nobel Resins, Bergen op Zoom
- Luwipal 018: = Melamin-Einbrennharz, BASF AG, Ludwigshafen

Die Verlaufmittel wurden einen Tag vor der Applikation eingearbeitet. Am Tag der Applikation wurde mit Solvesso 150 die Viskosität auf 24 Sekunden, DIN 4mm-Auslaufbecher eingestellt. Die Applikation erfolgte mittels Spritzautomaten.

Die Aushärtung erfolgte nach 30 Minuten Ablüftzeit bei 140°C in 30 Minuten. Die Schicktdicke betrug 25µm.

### Visuelle Beurteilung des Verlaufs:

1 = sehr gut bis 5 = schlecht

| Verlaufmittel | Einsatzmenge | Verlauf |
|---|---|---|
| Modaflow | 0.15% | 5 |
| Beispiel12 | 0.15% | 2 |
| Beispiel 3 | 0.15% | 1 |
| Beispiel 10 | 0.15% | 2 |

Modaflow = Poly(ethylacrylat/2-ethylhexylacrylat),Monsanto

## Patentansprüche

1. Verwendung von verzweigten Polymeren mit einem Gewichtsmittel des Molekulargewichtes von 5.000 bis 100.000, welche aus einem radikalisch oder ionisch polymerisierten Basismolekül bestehen, in das makromonomere Einheiten, die an einem terminalen Ende eine monomere Einheit mit einer ethylenisch ungesättigten Bindung aufweisen und die ein Gewichtsmittel des Molekulargewichtes von 1.000 bis 30.000 besitzen, radikalisch oder ionisch einpolymerisiert sind, wobei der Gewichtsanteil der makromonomeren Einheiten bezogen auf das Gesamtgewicht des verzweigten Polymers 1 bis 60 Gew.-% beträgt, als Verlaufmittel für Beschichtungsmittelformulierungen zur Oberflächenbeschichtung.

2. Verwendung nach Anspruch 1, **dadurch gekennzeichnet, daß** das Basismolekül radikalisch oder ionisch polymerisierte monomeren Einheiten umfaßt, die ausgewählt sind aus der Gruppe bestehend aus Alkenen und Arylalkenen mit 2 bis 30 C-Atomen, Alkylacrylaten und Alkylmethacrylaten von geradkettigen, verzweigten oder cycloaliphatischen Alkoholen mit 1 bis 22 C-Atomen, Aralkylacrylaten und Aralkylmethacrylaten von Aralkylalkoholen mit 8 bis 18 C-Atomen, Polyethylenglykolmonoacrylaten oder Polyethylenglykolmethacrylaten mit 5 bis 80 C-Atomen, Hydroxyalkylacrylaten und Hydroxyalkylmethacrylaten von geradkettigen, verzweigten oder cycloaliphatischen Diolen mit 2 bis 36 C-Atomen, Acrylsäureamiden und Methacrylsäureamiden von geradkettigen, verzweigten oder cycloaliphatischen Aminen mit 1 bis 22 C-Atomen, Aminoalkylacrylaten und Aminoalkylmethacrylaten von geradkettigen, verzweigten oder cycloaliphatischen Aminoalkoholen mit 2 bis 8 C-Atomen, Maleinsäureestern, Itaconsäureestern und Fumarsäureestern von geradkettigen, verzweigten oder cycloaliphatischen Alkoholen mit 1bis 22 C-Atomen, Perfluoralkylacrylaten und Perfluoralkylmethacrylaten mit 6 bis 20 C-Atomen, Vinylestern, Vinylethern und Vinylketonen mit 3 bis 20 C-Atomen, sowie Caprolacton- und/oder Valerolactonmodifizierten Hydroxyalkylacrylaten und Caprolacton- und/oder Valerolactonmodifizierten Hydroxyalkylmethacrylaten mit einem mittleren Molekulargewicht von 220 bis 1200, wobei die Hydroxyalkylacrylate und die Hydroxyalkylmethacrylate bevorzugt von geradkettigen, verzweigten oder cycloaliphatischen Diolen mit 2 bis 8 C-Atomen abgeleitet sind.

3. Verwendung nach Anspruch 1 oder 2, **dadurch gekennzeichnet, daß** das Basismolekül radikalisch oder ionisch polymerisierte monomeren Einheiten umfaßt, die ausgewählt sind aus der Gruppe bestehend aus Acrylsäure, Methacrylsäure, Methylacrylat, Methylmethacrylat, Ethylacrylat, Ethylmethacrylat, n-Butylacrylat, n-Butylmethacrylat, i-Butylacrylat, i-Butylmethacrylat, t-Butylacrylat, t-Butylmethacrylat, Laurylacrylat, Laurylmethacrylat, 2-Ethylhexylacrylat, 2-Ethylhexylmethacrylat, Stearylacrylat, Stearylmethacrylat, Behenylacrylat, Behenylmethacrylat, Cyclohexylacrylat, Cyclohexylmethacrylat, Isobornylacrylat, Isobornylmethacrylat, Hydroxyethylacrylat, Hydroxyethylmethacrylat, Styrol, α-Methylstyrol, Acrylnitril, Triethylenglycolmonoacrylat, Triethylenglycolmonomethacrylat, Ethyvinylether, Butylvinylether, Cyclohexylvinylether, Vinylacetat, N,N-Dimethylaminoethylacrylat, N,N-Dimethylaminoethylmethacrylat, N,N-Dimethylaminopropylacrylat, N,N-Dimethylaminopropylmethacrylat, Polyethylenglykolmonoacrylat, Polyethylenglykolmonomethacrylat, sowie Caprolacton-und/oder Valerolacton-modifiziertem Hydroxyethylacrylat und Caprolacton-und/oder Valerolacton-modifiziertem Hydroxyethylmethacrylat mit einem Molekulargewicht zwischen 220 und 1.200.

4. Verwendung nach einem oder mehreren der Ansprüche 1 bis 3, **dadurch gekennzeichnet, daß** die makromonomeren Einheiten Polymere aus radikalischer oder ionischer Polymerisation sind.

5. Verwendung nach Anspruch 4, **dadurch gekennzeichnet, daß** die makromonomeren Einheiten als Polymere aus radikalischer oder ionischer Polymerisation monomere Einheiten umfassen, die ausgewählt sind aus der Gruppe bestehend aus Alkenen und Arylalkenen mit 2 bis 30 C-Atomen, Alkylacrylaten und Alkylmethacrylaten von geradkettigen, verzweigten oder cycloaliphatischen Alkoholen mit 1 bis 22 C-Atomen, Aralkylacrylaten und Aralkylmethacrylaten von Aralkylalkoholen mit 8 bis 18 C-Atomen, Polyethylenglykolmonoacrylaten oder Polyethylenglykolmethacrylaten mit 5 bis 80 C-Atomen, Hydroxyalkylacrylaten und Hydroxyalkylmethacrylaten von geradkettigen, verzweigten oder cycloaliphatischen Diolen mit 2 bis 36 C-Atomen, Perfluoralkylacrylaten und Perfluoralkylmethacrylaten mit 6 bis 20 C-Atomen, sowie Vinylestern, Vinylethern und Vinylketonen mit 3 bis 20 C-Atomen.

6. Verwendung nach Anspruch 4 oder 5, **dadurch gekennzeichnet, daß** die makromonomeren Einheiten als Polymere aus radikalischer oder ionischer Polymerisation monomere Einheiten umfassen, die ausgewählt sind aus der Gruppe bestehend aus Ethylacrylat, Ethylmethacrylat, n-Butylacrylat, n-Butylmethacrylat, i-Butylacrylat, i-Butylmethacrylat, t-Butylacrylat, t-Butylmethacrylat, Laurylacrylat, Laurylmethacrylat, Stearylacrylat, Stearylmethacrylat, 2-Ethylhexylacrylat, 2-Ethylhexylmethacrylat, Behenylacrylat, Behenylmethacrylat, Cyclohexylacrylat, Cyclohexylmethacrylat, Isobornylacrylat, Isobornylmethacrylat, Hydroxyethylacrylat, Hydroxyethylmethacrylat, Styrol, α-Methylstyrol, Acrylnitril, Triethylenglycolmonoacrylat, Triethylenglycolmonomethacrylat, Ethyvinylether, Butylvinylether, Cyclohexylvinylether, sowie Vinylacetat.

7. Verwendung nach einem oder mehreren der Ansprüche 1 bis 3, **dadurch gekennzeichnet, daß** es sich bei den makromonomeren Einheiten um Polydimethylsiloxane handelt.

8. Verwendung nach einem oder mehreren der Ansprüche 1 bis 7, **dadurch gekennzeichnet, daß** die makromonomeren Einheiten an einem terminalen Ende eine Struktur ausgewählt aus den Strukturen 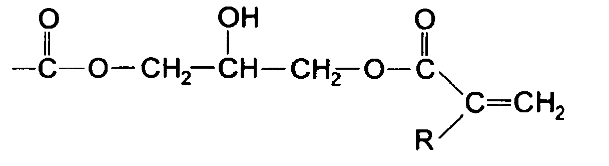 und 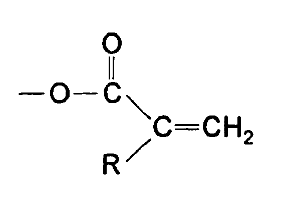 in denen der Rest R einem Wasserstoffatom oder einer Methylgruppe entspricht aufweisen.

9. Verwendung nach einem oder mehreren der Ansprüche 1 bis 8, **dadurch gekennzeichnet, daß** der Gewichtsanteil der makromonomeren Einheiten bezogen auf das Gesamtgewicht des verzweigten Polymers 2 bis 30 Gewichtsprozent beträgt.

10. Verwendung nach einem oder mehreren der Ansprüche 1 bis 9, **dadurch gekennzeichnet, daß** der Gewichtsanteil der makromonomeren Einheiten bezogen auf das Gesamtgewicht des verzweigten Polymers 2 bis 15 Gewichtsprozent beträgt.

11. Verwendung nach einem oder mehreren der Ansprüche 1 bis 10, **dadurch gekennzeichnet, daß** die makromonomeren Einheiten ein Gewichtsmittel des Molekulargewichtes von 5.000 bis 10.000 besitzen.

12. Verwendung nach einem oder mehreren der Ansprüche 1 bis 11, **dadurch gekennzeichnet, daß** das verzweigte Polymer ein Gewichtsmittel des Molekulargewichtes von 10.000 bis 75.000 besitzt.

13. Verwendung nach einem oder mehreren der Ansprüche 1 bis 12, **dadurch gekennzeichnet, daß** das verzweigte Polymer ein Gewichtsmittel des Molekulargewichtes von 15.000 bis 50.000 besitzt.

14. Verwendung nach einem oder mehreren der Ansprüche 1 bis 13, **dadurch gekennzeichnet, daß** im verzweigten Polymer vorhandene funktionelle Hydroxylgruppen verestert sind mit mindestens einer Verbindung ausgewählt aus der Gruppe bestehend aus Maleinsäureanhydrid, Bernsteinsäureanhydrid, Phthalsäureanhydrid, Acrylsäure und Methacrylsäure.

15. Verwendung nach einem oder mehreren der Ansprüche 1 bis 14, wobei das verzweigte Polymer in einer Konzentration von 0,01 bis 5 Gew.-% in der Beschichtungsmittelformulierung enthalten ist.

16. Verwendung nach einem oder mehreren der Ansprüche 1 bis 15, wobei das verzweigte Polymer in einer Konzentration von 0,05 bis 2 Gew.-% in der Beschichtungsmittelformulierung enthalten ist

17. Verwendung nach einem oder mehreren der Ansprüche 1 bis 16, wobei das verzweigte Polymer in einer Konzentration von 0,1 bis 1 Gew.-% in der Beschichtungsmittelformulierung enthalten ist.

## Claims

1. Use of branched polymers having a weight-average molecular weight of from 5000 to 100,000 and comprising a free-radically or ionically polymerized base molecule into which macromonomeric units containing at one end a monomeric unit which has an ethylenically unsaturated bond and possessing a weight-average molecular weight of from 1000 to 30,000 have been incorporated by free-radical or ionic copolymerization, the weight fraction of the macromonomeric units, based on the total weight of the branched polymer, being from 1 to 60% by weight, as levelling agents for coating formulations for coating surfaces.

2. Use according to Claim 1, **characterized in that** the base molecule comprises free-radically or ionically polymerized monomeric units selected from the group consisting of alkenes and arylalkenes having from 2 to 30 carbon atoms, alkyl acrylates and alkyl methacrylates of straight-chain, branched or cycloaliphatic alcohols having from 1 to 22 carbon atoms, aralkyl acrylates and aralkyl methacrylates of aralkyl alcohols having from 8 to 18 carbon atoms, polyethylene glycol monoacrylates or polyethylene glycol methacrylates having from 5 to 80 carbon atoms, hydroxyalkyl acrylates and hydroxyalkyl methacrylates of straight-chain, branched or cycloaliphatic diols having from 2 to 36 carbon atoms, acrylamides and methacrylamides of straight-chain, branched or cycloaliphatic amines having from 1 to 22 carbon atoms, aminoalkyl acrylates and aminoalkyl methacrylates of straight-chain, branched or cycloaliphatic amino alcohols having from 2 to 8 carbon atoms, maleates, itaconates and fumarates of straight-chain, branched or cycloaliphatic alcohols having from 1 to 22 carbon atoms, perfluoroalkyl acrylates and perfluoroalkyl methacrylates having from 6 to 20 carbon atoms, vinyl esters, vinyl ethers and vinyl ketones having from 3 to 20 carbon atoms, and also caprolactone- and/or valerolactone-modified hydroxyalkyl acrylates and caprolactone- and/or valerolactone-modified hydroxyalkyl methacrylates having an average molecular weight of from 220 to 1200, the hydroxyalkyl acrylates and the hydroxyalkyl methacrylates being derived preferably from straight-chain, branched or cycloaliphatic diols having from 2 to 8 carbon atoms.

3. Use according to Claim 1 or 2, **characterized in that** the base molecule comprises free-radically or ionically polymerized monomeric units selected from the group consisting of acrylic acid, methacrylic acid, methyl acrylate, methyl methacrylate, ethyl acrylate, ethyl methacrylate, n-butyl acrylate, n-butyl methacrylate, i-butyl acrylate, i-butyl methacrylate, t-butyl acrylate, t-butyl methacrylate, lauryl acrylate, lauryl methacrylate, 2-ethylhexyl acrylate, 2-ethylhexyl methacrylate, stearyl acrylate, stearyl methacrylate, behenyl acrylate, behenyl methacrylate, cyclohexyl acrylate, cyclohexyl methacrylate, isobornyl acrylate, isobornyl methacrylate, hydroxyethyl acrylate, hydroxyethyl methacrylate, styrene, α-methylstyrene, acrylonitrile, triethylene glycol monoacrylate, triethylene glycol monomethacrylate, ethyl vinyl ether, butyl vinyl ether, cyclohexyl vinyl ether, vinyl acetate, N,N-dimethylaminoethyl acrylate, N,N-dimethylaminoethyl methacrylate, N,N-dimethylaminopropyl acrylate, N,N-dimethylaminopropyl methacrylate, polyethylene glycol monoacrylate, polyethylene glycol monomethacrylate, and also caprolactone- and/or valerolactone-modified hydroxyethyl acrylate and caprolactone- and/or valerolactone-modified hydroxyethyl methacrylate having a molecular weight of between 220 and 1200.

4. Use according to one or more of Claims 1 to 3, **characterized in that** the macromonomeric units are polymers formed by free-radical or ionic addition polymerization.

5. Use according to Claim 4, **characterized in that** the macromonomeric units, as polymers formed by free-radical or ionic addition polymerization, comprise monomeric units selected from the group consisting of alkenes and arylalkenes having from 2 to 30 carbon atoms, alkyl acrylates and alkyl methacrylates of straight-chain, branched or cycloaliphatic alcohols having from 1 to 22 carbon atoms, aralkyl acrylates and aralkyl methacrylates of aralkyl alcohols having from 8 to 18 carbon atoms, polyethylene glycol monoacrylates or polyethylene glycol methacrylates having from 5 to 80 carbon atoms, hydroxyalkyl acrylates and hydroxyalkyl methacrylates of straight-chain, branched or cycloaliphatic diols having from 2 to 36 carbon atoms, perfluoroalkyl acrylates and perfluoroalkyl methacrylates having from 6 to 20 carbon atoms, and vinyl esters, vinyl ethers and vinyl ketones having from 3 to 20 carbon atoms.

6. Use according to Claim 4 or 5, **characterized in that** the macromonomeric units, as polymers formed by free-radical or ionic addition polymerization, comprise monomeric units selected from the group consisting of ethyl acrylate, ethyl methacrylate, n-butyl acrylate, n-butyl methacrylate, i-butyl acrylate, i-butyl methacrylate, t-butyl acrylate, t-butyl methacrylate, lauryl acrylate, lauryl methacrylate, stearyl acrylate, stearyl methacrylate, 2-ethylhexyl acrylate, 2-ethylhexyl methacrylate, behenyl acrylate, behenyl methacrylate, cyclohexyl acrylate, cyclohexyl methacrylate, isobornyl acrylate, isobornyl methacrylate, hydroxyethyl acrylate, hydroxyethyl methacrylate, styrene, α-methylstyrene, acrylonitrile, triethylene glycol monoacrylate, triethylene glycol monomethacrylate, ethyl vinyl ether, butyl vinyl ether, cyclohexyl vinyl ether and vinyl acetate.

7. Use according to one or more of Claims 1 to 3, **characterized in that** the macromonomeric units are polydimethylsiloxanes.

8. Use according to one or more of Claims 1 to 7, **characterized in that** the macromonomeric units have at one end a structure selected from the structures 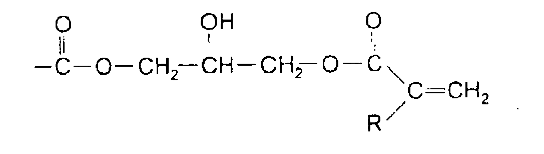 and 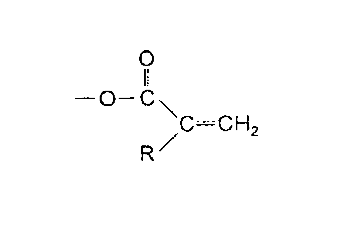 in which the radical R corresponds to a hydrogen atom or a methyl group.

9. Use according to one or more of Claims 1 to 8, **characterized in that** the weight fraction of the macromonomeric units, based on the total weight of the branched polymer, is from 2 to 30 per cent by weight.

10. Use according to one or more of Claims 1 to 9, **characterized in that** the weight fraction of the macromonomeric units, based on the total weight of the branched polymer, is from 2 to 15 per cent by weight.

11. Use according to one or more of Claims 1 to 10, **characterized in that** the macromonomeric units possess a weight-average molecular weight of from 5000 to 10,000.

12. Use according to one or more of Claims 1 to 11, **characterized in that** the branched polymer possesses a weight-average molecular weight of from 10,000 to 75,000.

13. Use according to one or more of Claims 1 to 12, **characterized in that** the branched polymer possesses a weight-average molecular weight of from 15,000 to 50,000.

14. Use according to one or more of Claims 1 to 13, **characterized in that** functional hydroxyl groups present in the branched polymer have been esterified with at least one compound selected from the group consisting of maleic anhydride, succinic anhydride, phthalic anhydride, acrylic acid and methacrylic acid.

15. Use according to one or more of Claims 1 to 14, the coating formulation containing the branched polymer in a concentration of from 0.01 to 5% by weight.

16. Use according to one or more of Claims 1 to 15, the coating formulation comprising the branched polymer in a concentration of from 0.05 to 2% by weight.

17. Use according to one or more of Claims 1 to 16, the coating formulation comprising the branched polymer in a concentration of from 0.1 to 1% by weight.

## Revendications

1. Utilisation de polymères ramifiés ayant un poids moléculaire moyen en poids de 5 000 à 100 000, lesquels se composent d'une molécule de base polymérisée par radicaux ou de façon ionique, dans laquelle des unités macromonomères, qui présentent au niveau d'une extrémité terminale une unité monomère ayant une liaison éthyléniquement insaturée et qui ont un poids moléculaire moyen en poids de 1 000 à 30 000, sont polymérisées par radicaux ou de façon ionique, où le pourcentage en poids des unités macromonomères est compris entre 1 et 60 % en poids par rapport au poids total du polymère ramifié, comme agent d'écoulement pour formulations d'agent de revêtement pour revêtement de surface.

2. Utilisation selon la revendication 1, **caractérisée en ce que** la molécule de base comprend des unités monomères polymérisées par radicaux ou de façon ionique, lesquelles sont sélectionnées dans le groupe constitué par les alcènes et arylalcènes présentant 2 à 30 atomes de carbone, les alkylacrylates et alkylméthacrylates d'alcools à chaîne droite, ramifiés ou cycloaliphatiques présentant 1 à 22 atomes de carbone, les aralkylacrylates et aralkylméthacrylates d'aralkylalcools présentant 8 à 18 atomes de carbone, les polyéthylèneglycolmonoacrylates ou polyéthylèneglycolméthacrylates présentant 5 à 80 atomes de carbone, les hydroxyalkylacrylates et hydroxyalkylméthacrylates de diols à chaîne droite, ramifiés ou cycloaliphatiques présentant 2 à 36 atomes de carbone, les amides d'acide acrylique et amides d'acide méthacrylique d'amines à chaîne droite, ramifiées ou cycloaliphatiques présentant 1 à 22 atomes de carbone, les aminoalkylacrylates et aminoalkylméthacrylates d'aminoalcools à chaîne droite, ramifiés ou cycloaliphatiques présentant 2 à 8 atomes de carbone, les esters d'acide maléique, esters d'acide itaconique et esters d'acide fumarique d'alcools à chaîne droite, ramifiés ou cycloaliphatiques présentant 1 à 22 atomes de carbone, les perfluoroalkylacrylates et perfluoroalkylméthacrylates présentant 6 à 20 atomes de carbone, les esters vinyliques, éthers vinyliques et cétones vinyliques présentant 3 à 20 atomes de carbone, ainsi que des hydroxyalkylacrylates modifiés par de la caprolactone et/ou valérolactone et des hydroxyalkylméthacrylates modifiés par de la caprolactone et/ou valérolactone ayant un poids moléculaire moyen de 220 à 1 200, où les hydroxyalkylacrylates et les hydroxyalkylméthacrylates sont dérivés de préférence de diols à chaîne droite, ramifiés ou cycloaliphatiques présentant 2 à 8 atomes de carbone.

3. Utilisation selon la revendication 1 ou 2, **caractérisée en ce que** la molécule de base comprend des unités monomères polymérisées par radicaux ou de façon ionique, lesquelles sont sélectionnées dans le groupe constitué par l'acide acrylique, l'acide méthacrylique, l'acrylate de méthyle, le méthacrylate de méthyle, l'acrylate d'éthyle, le méthacrylate d'éthyle, le n-butylacrylate, le n-butylméthacrylate, l'i-butylacrylate, l'i-butylméthacrylate, le t-butylacrylate, le t-butylméthacrylate, l'acrylate de lauryle, le méthacrylate de lauryle, le 2-éthylhexylacrylate, le 2-éthylhexylméthacrylate, l'acrylate de stéaryle, le méthacrylate de stéaryle, le béhénylacrylate, le béhénylméthacrylate, le cyclohexylacrylate, le cyclohexylméthacrylate, l'isobornylacrylate, l'isobornylméthacrylate, l'hydroxyéthylacrylate, l'hydroxyéthylméthacrylate, le styrol, l'α-méthylstyrol, l'acrylonitrile, le triéthylèneglycolmonoacrylate, le triéthylèneglycolmonométhacrylate, l'éther éthylvinylique, l'éther butylvinylique, le cyclohexylvinyléther, l'acétate de vinyle, le N,N-diméthylaminoéthylacrylate, le N,N-diméthylaminoéthylméthacrylate, le N,N-diméthylaminopropylacrylate, le N,N-diméthylaminopropylméthacrylate, le polyéthylèneglycolmonoacrylate, le polyéthylèneglycolmonométhacrylate, ainsi que l'hydroxyéthylacrylate modifié par de la caprolactone et/ou valérolactone et l'hydroxyéthylméthacrylate modifié par de la caprolactone et/ou valérolactone ayant un poids moléculaire entre 220 et 1 200.

4. Utilisation selon l'une ou plusieurs des revendications 1 à 3, **caractérisée en ce que** les unités macromonomères sont des polymères issus de la polymérisation radicalaire ou ionique.

5. Utilisation selon la revendication 4, **caractérisée en ce que** les unités macromonomères comprennent comme polymères des unités monomères issues de la polymérisation radicalaire ou ionique, lesquelles sont sélectionnées dans le groupe constitué par les alcènes et arylalcènes présentant 2 à 30 atomes de carbone, les alkylacrylates et alkylméthacrylates d'alcools à chaîne droite, ramifiés ou cycloaliphatiques présentant 1 à 22 atomes de carbone, les aralkylacrylates et aralkylméthacrylates d'aralkylalcools présentant 8 à 18 atomes de carbone, les polyéthylèneglycolmonoacrylates ou polyéthylèneglycolméthacrylates présentant 5 à 80 atomes de carbone, les hydroxyalkylacrylates et hydroxyalkylméthacrylates de diols à chaîne droite, ramifiés ou cycloaliphatiques présentant 2 à 36 atomes de carbone, les perfluoroalkylacrylates et perfluoroalkylméthacrylates présentant 6 à 20 atomes de carbone, ainsi que les esters vinyliques, éthers vinyliques et cétones vinyliques présentant 3 à 20 atomes de carbone.

6. Utilisation selon la revendication 4 ou 5, **caractérisée en ce que** les unités macromonomères comprennent comme polymères des unités monomères issues de la polymérisation radicalaire ou ionique, lesquelles sont sélectionnées dans le groupe constitué par l'éthylacrylate, l'éthylméthacrylate, le n-butylacrylate, le n-butylméthacrylate, l'i-butylacrylate, l'i-butylméthacrylate, le t-butylacrylate, le t-butylméthacrylate, le laurylacrylate, le laurylméthacrylate, le stéarylacrylate, le stéarylméthacrylate, le 2-éthylhexylacrylate, le 2-éthylhexylméthacrylate, le béhénylacrylate, le béhénylméthacrylate, le cyclohexylacrylate, le cyclohexylméthacrylate, l'isobornylacrylate, l'isobornylméthacrylate, l'hydroxyéthylacrylate, l'hydroxyéthylméthacrylate, le styrol, l'α-méthylstyrol, l'acrylonitrile, le triéthylèneglycolmonoacrylate, le triéthylèneglycolmonométhacrylate, l'éther éthylvinylique, l'éther butylvinylique, le cyclohexylvinyléther, ainsi que l'acétate vinylique.

7. Utilisation selon l'une ou plusieurs des revendications 1 à 3, **caractérisée en ce que** les unités macromonomères sont des polydiméthylsiloxanes.

8. Utilisation selon l'une ou plusieurs des revendications 1 à 7, **caractérisée en ce que** les unités macromonomères au niveau d'une extrémité terminale présentent une structure sélectionnée parmi les structures 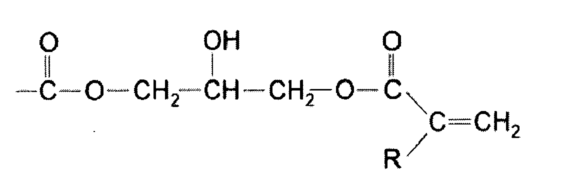 et 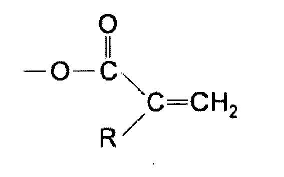 dans lesquelles le groupe R correspond à un atome d'hydrogène ou à un groupe méthyle.

9. Utilisation selon l'une ou plusieurs des revendications 1 à 8, **caractérisée en ce que** le pourcentage en poids des unités macromonomères est compris entre 2 et 30 % en poids par rapport au poids total du polymère ramifié.

10. Utilisation selon l'une ou plusieurs des revendications 1 à 9, **caractérisée en ce que** le pourcentage en poids des unités macromonomères est compris entre 2 et 15 % en poids par rapport au poids total du polymère ramifié.

11. Utilisation selon l'une ou plusieurs des revendications 1 à 10, **caractérisée en ce que** les unités macromonomères ont un poids moléculaire moyen en poids de 5 000 à 10 000.

12. Utilisation selon l'une ou plusieurs des revendications 1 à 11, **caractérisée en ce que** le polymère ramifié a un poids moléculaire moyen en poids de 10 000 à 75 000.

13. Utilisation selon l'une ou plusieurs des revendications 1 à 12, **caractérisée en ce que** le polymère ramifié a un poids moléculaire moyen en poids de 15 000 à 50 000.

14. Utilisation selon l'une ou plusieurs des revendications 1 à 13, **caractérisée en ce que** des groupes hydroxyle fonctionnels présents dans le polymère ramifié sont estérisés avec au moins un composé sélectionné dans le groupe constitué par l'anhydride d'acide maléique, l'anhydride d'acide succinique, l'anhydride d'acide phtalique, l'acide acrylique et l'acide méthacrylique.

15. Utilisation selon l'une ou plusieurs des revendications 1 à 14, dans laquelle le polymère ramifié est contenu avec une concentration de 0,01 à 5 % en poids dans la formulation d'agent de revêtement.

16. Utilisation selon l'une ou plusieurs des revendications 1 à 15, dans laquelle le polymère ramifié est contenu avec une concentration de 0,05 à 2 % en poids dans la formulation d'agent de revêtement.

17. Utilisation selon l'une ou plusieurs des revendications 1 à 16, dans laquelle le polymère ramifié est contenu avec une concentration de 0,1 à 1 % en poids dans la formulation d'agent de revêtement.
